# EUROPÄISCHE PATENTSCHRIFT

(11) **EP 2 690 266 B1**
(45) Veröffentlichungstag und Bekanntmachung des Hinweises auf die Patenterteilung: **10.02.2016**
(21) Anmeldenummer: 13175574.6
(22) Anmeldetag: 08.07.2013
(51) Int. Cl.: F01N 13/00

(54) **Turbine für eine Brennkraftmaschine**
Turbine for a combustion engine
Turbine pour moteur à combustion interne

(30) Priorität: 26.07.2012 DE 102012213161
(43) Veröffentlichungstag der Anmeldung: 29.01.2014
(73) Patentinhaber: Bosch Mahle Turbo Systems GmbH & Co. KG, 70376 Stuttgart (DE)
(72) Erfinder: Brück, Marc, 72108 Rottenburg (DE); Klett, Sascha, 71570 Oppenweiler (DE); Rauscher, Martin, 71636 Ludwigsburg (DE); Weiss, Hartmut, 70569 Stuttgart (DE)
(74) Vertreter: BRP Renaud & Partner mbB Rechtsanwälte Patentanwälte Steuerberater

(56) Entgegenhaltungen:
- DE-A1-102009 046 391
- JP-A- H0 196 438
- JP-A- 2009 287 409

## Beschreibung

Die Erfindung betrifft eine Turbine für eine Brennkraftmaschine sowie einen Abgasturbolader mit einer solchen Turbine.

In Kraftfahrzeugen wird das von einer Brennkraftmaschine erzeugte Abgas häufig mittels eines Abgasturboladers nachbehandelt, wobei ein solcher Abgasturbolader hierzu an eine Abgasleitung der Brennkraftmaschine angeschlossen sein kann. Zusätzlich wird in Brennkraftmaschinen das Luft-Kraftstoff-Verhältnis des Abgases geregelt, indem dieses mit Hilfe eines geeigneten Abgassensors erfasst wird, welcher im Abgastrakt der Brennkraftmaschine angebracht ist. Die Regelung kann in bekannter Weise derart erfolgen, dass das mittels des Abgassensors erfasste Luft-Kraftstoff-Verhältnis mit einem vorbestimmten Sollwert zur Übereinstimmung gebracht wird. Entscheidend für eine optimale Funktionsweise des Abgassensors ist, dass dieser an einer geeigneten Stelle des Abgastrakts angebracht ist, so dass fehlerhafte Sensorwerte des Abgassensors, beispielsweise aufgrund von in dem Abgas enthaltenen Wasserdampf, der auf dem Abgassensor zu Kondenswasser auskondensiert ist, vermieden werden. Für den Fall, dass in dem die Brennkraftmaschine verwendenden Kraftfahrzeug sowohl ein Abgasturbolader als auch eine Katalysatoreinheit zum Reinigen des von der Brennkraftmaschine erzeugten Abgases verwendet werden, wird ein solcher Abgassensor üblicherweise in einem Bereich zwischen dem Abgasturbolader und der Katalysatoreinheit angeordnet. Aufgrund der relativ großen thermischen Masse des Abgasturboladers ist nach einer Inbetriebnahme der Brennkraftmaschine ein relativ langer Zeitraum erforderlich, bis der Abgastrakt einschließlich Abgasturbolader und (falls vorhanden) Katalysatoreinheit in der Brennkraftmaschine eine ausreichend hohe Temperatur aufweisen, so dass sichergestellt ist, dass im Abgas enthaltener Wasserdampf nicht zu Kondenswasser auskondensieren und zu unerwünschten Messfehlern, beispielsweise aufgrund einer unerwünschten Benetzung einer Messkeramik des Abgassensors mit kondensiertem Wasserdampf, führen kann.

Ein weiterer Nachteil von herkömmlichen Abgassensoren, welche zur Vermeidung o.g. Probleme direkt im Zulauf zur Turbine des Abgasturboladers angebracht sind, besteht darin, dass sie aufgrund einer thermischen Überbeanspruchung (Thermoschock) beschädigt werden können.

Die DE 10 2007 021 763 A1 betrifft eine Turbine eines Turboladers, die an einer Abgasdurchführung angeordnet ist. Die Turbine umfasst einen Abgassensor, welcher stromab und in der Nähe der Turbine des Abgasturboladers angebracht ist. Das Bauelement des Abgassensors ist dabei auf oder in der Nähe einer Auslassachse eines Auslasskanals der Turbine des Abgasturboladers angeordnet.

Die DE 10 2009 046 391 A1 beschreibt ein Verfahren zum Betreiben eines dem Abgas im Abgastrakt einer Brennkraftmaschine ausgesetzten Abgassensors, gemäß welchem Abgas mittels mindestens einer Kapillare zu dem Abgassensor geführt wird. Zur Erzielung eines robusten Verfahrens, welches eine hohe Messdynamik des Abgassensors sicherstellt und keine zusätzlichen Bauelemente erfordert, wird das über die mindestens eine Kapillare zum Abgassensor strömende Abgas stromaufwärts einer im Abgastrakt vorhandenen, einen Abgasstaudruck erzeugenden Staudruckquelle vom Abgas abgezweigt.

Es ist eine Aufgabe der vorliegenden Erfindung, eine verbesserte Ausführungsform für eine Turbine für eine Brennkraftmaschine anzugeben, bei welcher oben genannte Nachteile beseitigt oder zumindest reduziert sind.

Die oben genannte Aufgabe wird gelöst durch den Gegenstand der unabhängigen Ansprüche. Bevorzugte Ausführungsformen sind Gegenstand der abhängigen Ansprüche.

Die erfindungsgemäße Turbine weist ein eine Einlass- und eine Auslassöffnung aufweisendes Turbinengehäuse auf, wobei ein Gehäuse-Innenraum von dem Turbinengehäuse umschlossen ist und von einem Abgas aus der Brennkraftmaschine durchströmbar ist. Die Turbine umfasst ferner einen in dem Turbinengehäuse um eine eine axiale Richtung definierende Drehachse drehbar gelagerten Turbinenrotor, welcher den Gehäuse-Innenraum in einen mit der Einlassöffnung in Fluidverbindung stehenden Hochdruckbereich und einen mit der Auslassöffnung in Fluidverbindung stehenden Niederdruckbereich trennt.

Die Turbine umfasst ferner einen in dem Turbinengehäuse angebrachten Messraum, in welchem der Abgassensor zur Bestimmung wenigstens eines Anteils einer Gaskomponente des im Turbinengehäuse abgeführten Abgases wenigstens teilweise angeordnet ist. Erfindungsgemäß sind in dem Turbinengehäuse jeweils eine Zuführungsleitung mit einer Zuführungsöffnung und eine Abführungsleitung mit einer Abführungsöffnung zum Zuführen bzw. Abführen von Abgas in bzw. aus dem Messraum integral mit dem Turbinengehäuse ausgebildet.

Erfindungsgemäß ist ein den Hochdruckbereich umschließender Bereich des Turbinengehäuses teilweise als Volute ausgebildet, in welcher die Zuführungsöffnung der Zuführungsleitung und die Abführungsöffnung der Abführungsleitung angeordnet sind. Mittels einer derartigen Anordnung der Zuführungs- und Abführungsleitung in dem Hochdruckbereich des Turbinengehäuses kann besonders gut sichergestellt werden, dass das aus der Brennkraftmaschine austretende Abgas vor dem Eintritt in den Messraum, in welchem der Abgassensor angeordnet ist, nur ein geringes Volumen des Abgastraktes (zwischen Brennkraftmaschine und Abgasturbolader) durchströmen muss, so dass eine unerwünschte Abkühlung des Abgases und damit verbundene Kondensationseffekte von in dem Abgas enthaltenen Wasserdampf weitgehend oder sogar vollständig vermieden werden können.

In der erfindungsgemäßen Turbine ist also ein Messraum separat ausgebildet, in welchem wiederum der erfindungsgemäße Abgassensor angeordnet ist. Dieser Messraum befindet sich vorzugsweise derart in dem Turbinengehäuse angeordnet, dass aus der Brennkraftmaschine austretendes Abgas vor dem Eintritt in den Messraum nur ein relativ geringes thermisches Volumen bzw. eine thermische Masse durchströmen muss. Auf diese Weise kann der Messraum (mittels des durch diesen strömenden Abgases) nach einer Inbetriebnahme der der Turbine vorgeschalteten Brennkraftmaschine relativ schnell auf eine ausreichend hohe Temperatur aufgeheizt werden kann, bei welcher eine unerwünschtes Kondensieren von in dem Abgas enthaltenem Wasserdampf weitgehend vermieden werden kann. Aufgrund der Bereitstellung einer Zuführungs- bzw. Abführungsleitung, welche integral in dem Turbinengehäuse ausgebildet ist, sind separate Zuführungs- bzw. Abführungsleitungen mit unerwünscht langen Laufwegen für das sie durchströmende Abgas nicht erforderlich, so dass auch die Zuführungs- und Abführungsleitung als Teil des Turbinengehäuses sehr schnell aufgeheizt werden können. Zudem ist die integrale Ausbildung der Zuführungs- bzw. Abführungsleitung in dem Turbinengehäuse technisch relativ einfach und somit kostengünstig zu bewerkstelligen.

Die erfindungsgemäße Turbine ermöglicht also einen sehr betriebssicheren Einsatz eines Abgassensors, bei welchem das Auftreten von Messfehlern weitgehend ausgeschlossen werden kann.

Vorzugsweise kann der Messraum als eine auf einer Außenoberfläche des Turbinengehäuses bereitgestellte Aufnahmeöffnung ausgebildet sein, in welche der Abgassensor einsteckbar oder einschraubbar ist, so dass der Abgassensor in einem in die Aufnahmeöffnung eingesteckten/eingeschraubten Zustand mit der Zuführungs- und Abführungsleitung in Fluidverbindung steht. Auf diese Weise lässt sich der Abgassensor auf einfache Weise an dem Turbinengehäuse bzw. dem Messraum montieren und bei Bedarf, beispielsweise zu Wartungs- oder Reparaturzwecken, auf einfache Weise wieder von diesem entfernen.

In einer besonders bevorzugten Ausführungsform kann ein den Hochdruckbereich umschließender Bereich des Turbinengehäuses teilweise als Volute ausgebildet sein, welche stromauf in einen sich entlang einer Zuführungskanal-Längsrichtung erstreckenden Zuführungskanal übergeht, der an einem der Volute abgewandten Ende die Einlassöffnung des Turbinengehäuses aufweist. Ein Strömungsquerschnitt des Zuführungskanals kann sich entlang der Längsrichtung zu der Einlassöffnung hin wenigstens abschnittsweise vergrößern, und die Zuführungs- und Abführungsöffnung können entlang der Zuführungskanal-Längsrichtung versetzt zueinander in dem Zuführungskanal angeordnet sein, wobei die Zuführungsöffnung in einem ersten Abschnitt des Zuführungskanals angeordnet ist, der einen größeren Strömungsquerschnitt aufweist als ein zweiter Abschnitt des Zuführungskanals, in welchem die Abführungsöffnung angeordnet ist. Da sich der Strömungsquerschnitt des Zuführungskanals von der Einlassöffnung zu der Volute hin verringert, bildet sich auch entlang der Längsrichtung des Zuführungskanals ein Druckgradient in dem Abgas aus, wobei gemäß der Bernoulli-Gleichung in Kombination mit der Kontinuitätsgleichung im Bereich des Zuführungskanals mit größerem Strömungsquerschnitt auch ein größerer Abgasdruck herrscht als in dem Bereich des Zuführungskanals mit geringerem Strömungsquerschnitt. Da die Zuführungs-Öffnung der Zuführungsleitung im Bereich des größeren Querschnitts des Zuführungskanals angeordnet ist und die Abführungsöffnung mit der Abführungsleitung entsprechend im Bereich eines kleineren Strömungsquerschnitts, kann der Druckgradient als treibende Kraft verwendet werden, um Abgas dem den Abgassensor aufweisenden Messraum zuzuführen und aus diesem auch wieder abzuführen.

In einer dazu alternativen Ausführungsform kann die Zuführungsöffnung in einem Querschnittsprofil in einem ersten radialen Abstand von einem durch die Drehachse des Turbinenrotors definierten Mittelpunkt angeordnet sein und die Abführungsöffnung in einem zweiten radialen Abstand von dem Mittelpunkt angeordnet sein, wobei der erste radiale Abstand größer als der zweite radiale Abstand ist. Auf diese Weise lässt sich ein in radialer Richtung in der Volute ausgebildeter Druckgradient ausnutzten, um eine hinreichend große Menge an Abgas über die Zuführungsöffnung dem Messraum zuzuführen und über die Abführungsleitung wieder aus dem Messraum abzuführen. Da der durch das Abgas erzeugte Gasdruck mit zunehmendem radialem Abstand von dem Mittelpunkt zunimmt, ist der Abgasdruck im Bereich des ersten radialen Abstands, in welchem sich die Zuführungsöffnung angeordnet befindet, größer als im Bereich des zweiten radialen Abstands, in welchem sich die Abführungsleitung angeordnet befindet. Somit lässt sich auch der radiale Druckgradient des Abgasdruckes als treibende Kraft für die Durchströmung des Messraumes mit Abgas nutzen. In einer besonders bevorzugten Ausführungsform kann die Zuführungsöffnung in der axialen Richtung versetzt zu der Abführungsöffnung angeordnet sein.

In einer weiteren alternativen Ausführungsform kann die Zuführungsöffnung in dem Hochdruckbereich und die Niederdrucköffnung in dem Niederdruckbereich der Turbine angeordnet sein, so dass die Zuführungsleitung den Messraum fluidisch mit dem Hochdruckbereich verbindet und die Abführungsleitung den Messraum fluidisch mit dem Niederdruckbereich verbindet. In diesem Fall kann das sich zwischen dem Hochdruckbereich und dem Niederdruckbereich ausbildende Druckgefälle des Abgases ausgenutzt werden, um Abgas dem Messraum zuzuführen und wieder aus diesem abzuführen.

Vorzugsweise ist die Zuführungs- und die Abführungsleitung in dem Turbinengehäuse jeweils als Durchgangsbohrung ausgebildet. Dies ermöglicht eine besonders einfache Herstellung der erfindungsgemäßen Zuführungs- bzw. Abführungsleitung.

Um die Herstellungskosten der erfindungsgemäßen Turbine weiter zu reduzieren, kann das Turbinengehäuse in einer besonders kostengünstigen Ausführungsform ein einstückig hergestelltes Gussteil sein.

Um eine dem Messraum zuzuführende Menge an Abgas auf flexible Weise einstellen zu können, kann in der Zuführungs- oder Abführungsleitung ein Stellglied zum Einstellen eines Öffnungsquerschnitts der Zuführungs- bzw. Abführungsleitung angeordnet sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch:
- Fig. 1: ein erstes Ausführungsbeispiel der erfindungsgemäßen Turbine,
- Fig. 2: eine perspektivische Teilansicht der Turbine gemäß der Figur 1,
- Fig. 3: ein zweites Ausführungsbeispiel der erfindungsgemäßen Turbine,
- Fig. 4: ein drittes Ausführungsbeispiel der erfindungsgemäßen Turbine,
- Fig. 5: ein viertes Ausführungsbeispiel der erfindungsgemäßen Turbine.

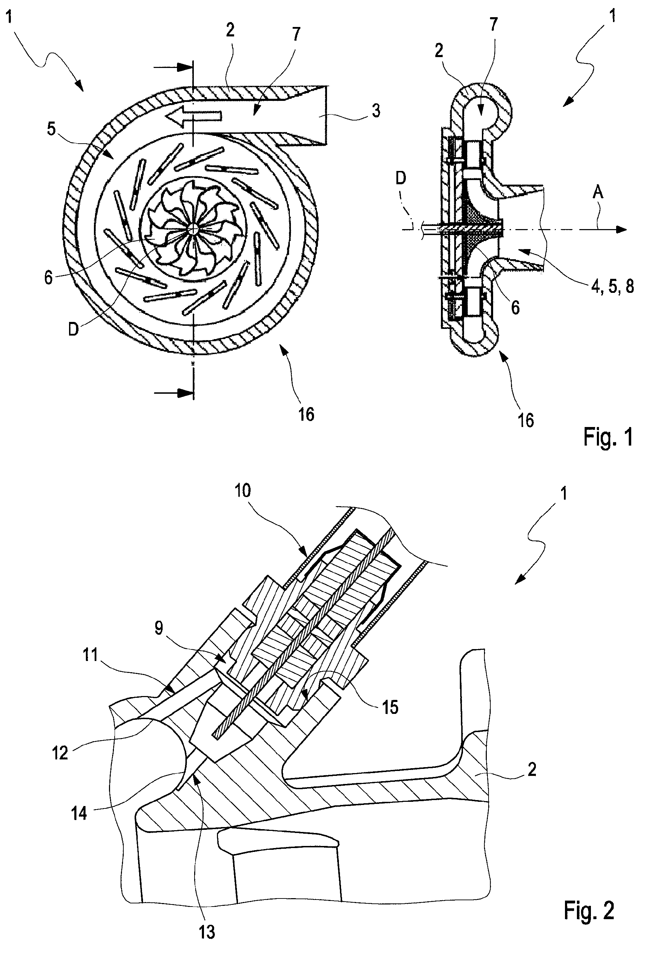

In den Figuren 1 und 2 ist eine erfindungsgemäße Turbine für eine Brennkraftmaschine grobschematisch dargestellt und mit 1 bezeichnet. Die Figur 1 zeigt dabei die Turbine in einer Längs- und Querschnittsansicht ohne den erfindungsgemäßen Abgassensor, die Figur 2 zeigt die Turbine 1 der Figur 1 in einer isometrischen Teilansicht und mit erfindungsgemäßem Abgassensor.

Die Turbine 1 weist ein Turbinengehäuse 2 mit einer Einlassöffnung 3 und einer Auslassöffnung 4 auf. Das Turbinengehäuse 2 umschließt einen Gehäuse-Innenraum 5, welcher von einem Abgas aus einer Brennkraftmaschine durchströmbar ist. In dem Turbinengehäuse 2 ist ein Turbinenrotor 6 angeordnet, welcher um eine eine axiale Richtung A definierende Drehachse D drehbar gelagert ist. Der Turbinenrotor 6 trennt den Gehäuse-Innenraum 5 und eine mit der Einlassöffnung 3 in Fluidverbindung stehenden Hochdruckbereich 7 von einem mit der Auslassöffnung in Fluidverbindung stehenden Niederdruckbereich 8. Die erfindungsgemäße Turbine 1 umfasst ferner einen in dem Turbinengehäuse 2 angebrachten Messraum 9 (vgl. Figur 2), in welchem ein Abgassensor 10 zur Bestimmung wenigstens eines Anteils einer Gaskomponente des in dem Turbinengehäuse 2 geführten Abgases wenigstens teilweise angeordnet ist. Vorzugsweise ist der Abgassensor 10 eine Lambdasonde.

In dem Turbinengehäuse 2 ist eine Zuführungsleitung 11 mit einer Zuführungsöffnung 12 und eine Abführungsleitung 13 mit einer Abführungsöffnung 14 zum Zuführen bzw. Abführen von Abgas in bzw. aus dem Messraum 9 integral mit dem Turbinengehäuse ausgebildet. Aus der Darstellung der Figur 2 lässt sich entnehmen, dass Zuführungsleitung 11, Abführungsleitung 13 und Messraum 9 außerhalb eines Abgas-Hauptpfades der Art eines "Bypasses" angeordnet sind. Die Figur 2 zeigt ferner, dass das Turbinengehäuse 2 auf einer Außenoberfläche eine Aufnahmeöffnung 15 aufweist, in welcher der Abgassensor 10 einsteckbar oder einschraubbar ist, so dass der Abgassensor 10 in einem in die Aufnahmeöffnung 15 abgesteckten Zustand mit der Zuführungs- und Abführungsleitung 11, 13 in Fluidverbindung steht. Zum Einschrauben in die Aufnahmeöffnung 15 können in dieser und im Abgassensor 10 ein entsprechendes Innen- bzw. Außengewinde vorgesehen sein.

Betrachtet man nun wieder die Darstellung der Figur 1, so erkennt man, dass ein den Hochdruckbereich 7 umschließender Bereich des Turbinengehäuses 2 teilweise als Volute 16 ausgebildet sein kann, in welcher die Zuführungsöffnung 12 der Zuführungsleitung 11 sowie die Abführungsöffnung 14 der Abführungsleitung 13 angeordnet sind.

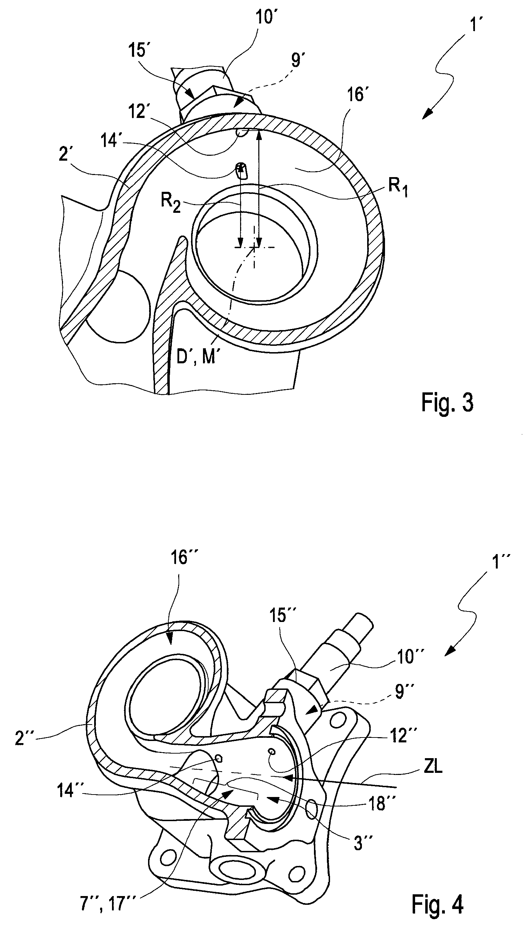

In der Figur 3 ist in einer isometrischen Teilansicht eine Variante der erfindungsgemäßen Turbine 1' gezeigt, gemäß welcher die Zuführungsöffnung 12' in einem (in der Figur 3 nicht gezeigten) Querschnittsprofil in einem ersten radialen Abstand R₁ von einem durch die Drehachse D' des Turbinenrotors 6 (in der Figur 3 nicht gezeigt) definierten Mittelpunkt M' angeordnet ist und die Abführungsöffnung 14' in einem zweiten radialen Abstand R₂ von dem Mittelpunkt M' angeordnet ist, wobei der erste radiale Abstand R₁ größer als der zweite radiale Abstand R₂ ist. Aufgrund des radialen Druckgefälles zwischen der Zuführungsöffnung 12' und der Abführungsöffnung 14' wirkt eine treibende Kraft, welche Abgas in den Messraum 9' führt und aus diesem wieder abführt. Das radiale Druckgefälle bildet sich dabei bedingt durch die Umlenkung von Abgas beim Eintritt in die Volute 16' aufgrund der dort wirksamen Zentrifugalkräfte aus, wobei der Abgasdruck in der Volute 16' radial nach außen zunimmt. Mittels der oben beschriebenen Anordnung der Zuführungsöffnung 12' bzw. Abführungsöffnung 14' kann der radiale Druckgradient des Abgases für eine Durchströmung des Messraums 9' und damit des in dem Messraum 9' angeordneten Sensorelements 10' ausgenutzt werden.

In einer in der Figur 4 in einer Teilansicht gezeigten Variante des Ausführungsbeispiels, welche ebenfalls die Turbine 1" in einer isometrischen Teilansicht darstellt, ist ein den Hochdruckbereich 7" umschließender Bereich des Turbinengehäuses 2" teilweise als Volute 16" ausgebildet, welche stromauf in einen sich entlang einer Zuführungskanal-Längsrichtung ZL erstreckenden Zuführungskanal 17" übergeht, welcher an einem der Volute 16" abgewandten Ende die Einlassöffnung 3" des Turbinengehäuses 2" aufweist. Aus der Darstellung der Figur 4 lässt sich unmittelbar entnehmen, dass ein Strömungsquerschnitt des Zuführungskanals 17" sich entlang der Zuführungskanal-Längsrichtung ZL zu der Einlassöffnung 3" hin abschnittsweise vergrößert. Gemäß der Variante sind die Zuführungs- und Abführungsöffnung 12" und 14" entlang der Zuführungskanal-Längsrichtung ZL versetzt zueinander in dem Zuführungskanal 17" angeordnet. Die Zuführungsöffnung 12" ist dabei in einem Abschnitt des Zuführungskanals 17" angeordnet, der einen größeren Strömungsquerschnitt aufweist als ein zweiter Abschnitt des Zuführungskanals 17", in welchem die Abführungsöffnung 14" angeordnet ist. Auf diese Weise wird das vorliegende Druckgefälle zwischen Zuführungsöffnung 12" und Abführungsöffnung 14" genutzt, um ein effektives Durchströmen des den Abgassensor 10" aufweisenden Messraums 9" mit Abgas sicherzustellen. Der Aufbau eines Druckgradienten in Strömungsrichtung des Abgases begründet sich also in der sich in Zuführungskanal-Längsrichtung ZL verjüngenden Querschnittsgeometrie des Zuführungskanals 17". Denn aufgrund des sich verjüngenden Strömungsquerschnitts nimmt in einem Bereich mit reduziertem Strömungsquerschnitts der statische Druck ab, während im Bereich mit erhöhtem Strömungsquerschnitt der statische Druck des Abgases zunimmt. (vgl. BernoulliGesetz und Kontinuitätsgleichung). Die Zuführungsöffnung 12" und die Abführungsöffnung 14" können derart zueinander im Zuführungskanal 17" angeordnet sein, dass bereits zu Wasser auskondensierter Wasserdampf und als Flüssigkeitsfilm im Zuführungskanal 17" transportiertes Wasser schwerkraftbedingt auf einen den beiden Öffnungen 12", 14" gegenüberliegenden Wandbereich 18" bewegt wird, so dass der Flüssigkeitsfilm nicht auf unerwünschte Weise über die Öffnungen 12", 14" zum Abgassensor 10" gelangen kann.

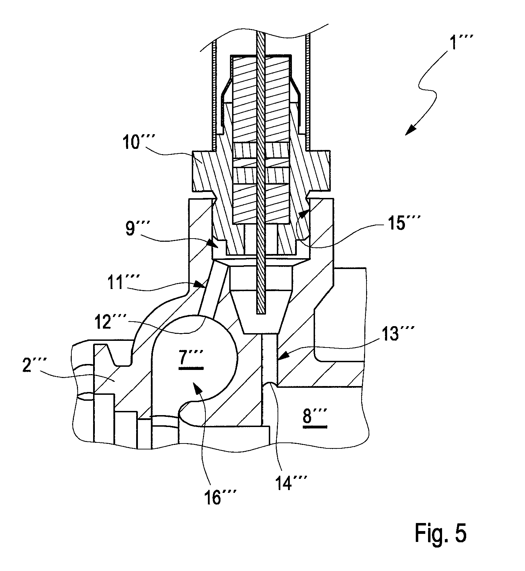

In einer weiteren, in der Figur 5 dargestellten Variante der erfindungsgemäßen Turbine 1"' ist die Zuführungsöffnung 12'" in dem Hochdruckbereich 7'" und die Niederdrucköffnung 14"' in dem Niederdruckbereich 8'" angeordnet, so dass die Zuführungsleitung 11" den Abgassensor 10'" in einem in dem Messraum 9'" angeordneten Zustand fluidisch mit dem Hochdruckbereich 7'" verbindet und die Abführungsleitung 13'" den Abgassensor 10'" in einem in dem Messraum 9'" angeordneten Zustand entsprechend fluidisch mit dem Niederdruckbereich 8"' verbindet. Für die Nutzung des Druckgradienten zwischen dem Hochdruckbereich 7"' und dem Niederdruckbereich 8'" des Turbinengehäuses 2'" wird also eine Art "Bypass" zwischen der Volute 16'" und einem Ausströmbereich des Turbinenrads der Turbine 1'" ausgebildet. Die Zuführungsleitung 11'" ist dann im Bereich der Volute 16'" in dem Turbinengehäuse angeordnet.

In allen vorangehend erläuterten Ausführungsvarianten sind die Zuführungs- und die Abführungsleitungen in dem Turbinengehäuse 2, 2', 2", 2'" vorzugsweise jeweils als Durchgangsbohrung ausgebildet. Ebenso kann in allen diesen Ausführungsvarianten das Turbinengehäuse 2, 2', 2", 2'" ein einstückig hergestelltes Gussteil sein. In einer in den Ausführungsbeispielen der Figuren 1 bis 5 nicht gezeigten Variante kann in der Zuführungs- oder Abführungsleitung ein Stellglied zum Einstellen eines Öffnungsquerschnitts der Zuführungs- oder Abführungsleitung angeordnet sein.

In allen vorangehend vorgestellten Ausführungsvarianten können die Zuführungsöffnung 12, 12', 12", 12'" und die Abführungsöffnung 14, 14', 14", 14'" derart im Turbinengehäuse 2, 2', 2", 2'" angeordnet sein, dass im Bereich dieser beiden Öffnungen bereits zu Wasser auskondensierter Wasserdampf und auch als Flüssigkeitsfilm transportiertes Wasser durch Zentrifugalkräfte von den beiden Öffnungen weg transportiert wird, so dass es nicht auf unerwünschte Weise in den Abgassensor 10, 10', 10", 10'" gelangen kann.

Die erfindungsgemäße Turbine 1, 1', 1", 1'" kann in einem Abgasturbolader für ein Kraftfahrzeug zum Einsatz kommen und neben der erfindungsgemäßen Turbine 1, 1', 1 ", 1'" zusätzlich einen Verdichter umfassen, wobei Turbine 1, 1', 1", 1'" und Verdichter mechanisch miteinander wirkverbunden sind. Der Verdichter kann dabei einen Verdichterrotor aufweisen, der mechanisch mit dem Turbinenrotor 6 der Turbine 1, 1', 1", 1'" wirkverbunden ist. Es ist klar, dass sich für die erfindungsgemäße Turbine 1, 1', 1 ", 1"' auch zahlreiche andere Anwendungsmöglichkeiten ergeben, beispielsweise in Verbindung mit einem elektrischen Generator zur Stromerzeugung.

Der Abgassensor 10, 10', 10", 10'" kann zur Temperaturbegrenzung des Abgasturboladers 1, 1', 1", 1'" verwendet werden, da über den temperaturabhängigen elektrischen Innenwiderstand einer im Abgassensor 10, 10', 10", 10'" vorgesehenen Heizeinrichtung auf die Temperatur des auf den Abgassensor 10, 10', 10", 10'" treffenden Abgases geschlossen werden kann.

## Patentansprüche

1. Turbine (1; 1'; 1 "; 1") für eine Brennkraftmaschine,
- mit einem eine Einlass- und eine Auslassöffnung (3, 4; 3') aufweisenden Turbinengehäuse (2; 2'; 2"; 2'"),
- mit einem Gehäuse-Innenraum (5), welcher von dem Turbinengehäuse (2; 2'; 2"; 2"') umschlossen ist und welcher von einem Abgas aus der Brennkraftmaschine durchströmbar ist,
- mit einem in dem Turbinengehäuse (2; 2'; 2"; 2"') um eine eine axiale Richtung (A) definierende Drehachse (D) drehbar gelagerten Turbinenrotor (6), welcher den Gehäuse-Innenraum (5) in einen mit der Einlassöffnung (3; 3') in Fluidverbindung stehenden Hochdruckbereich (7, 7") und einen mit der Auslassöffnung (4) in Fluidverbindung stehenden Niederdruckbereich (8, 8"') trennt,
- mit einem in dem Turbinengehäuse (2; 2'; 2"; 2"') angebrachten Messraum (9; 9'; 9"; 9"'), in welchem ein Abgassensor (10; 10'; 10"; 10"') zur Bestimmung wenigstens eines Anteils einer Gaskomponente des in dem Turbinengehäuse (2; 2'; 2"; 2"') geführten Abgases wenigstens teilweise angeordnet ist,
- wobei in dem Turbinengehäuse (2; 2'; 2"; 2"') jeweils eine Zuführungsleitung (11; 11 ") mit einer Zuführungsöffnung (12; 12'; 12"; 12"') und eine Abführungsleitung (13; 13") mit einer Abführungsöffnung (14; 14'; 14"; 14"') zum Zuführen bzw. Abführen von Abgas in bzw. aus dem Messraum (9; 9'; 9"; 9"') integral mit dem Turbinengehäuse (2; 2'; 2"; 2"') ausgebildet sind,
**dadurch gekennzeichnet, dass**
ein den Hochdruckbereich (7) umschließender Bereich des Turbinengehäuses (2) teilweise als Volute (16; 16') ausgebildet ist, in welcher die Zuführungsöffnung (12; 12') der Zuführungsleitung (11) und die Abführungsöffnung (14; 14') der Abführungsleitung (13; 13') angeordnet sind.

2. Turbine (1; 1'; 1 "; 1"') nach Anspruch 1,
**dadurch gekennzeichnet, dass**
der Messraum (9; 9'; 9"; 9"') als eine auf einer Außenoberfläche des Turbinengehäuses (2; 2'; 2"; 2"') bereitgestellte Aufnahmeöffnung (15; 15'; 15"; 15"') ausgebildet ist, in welche der Abgassensor (10; 10'; 10"; 10"') einsteckbar ist, so dass der Abgassensor (9; 9'; 9"; 9"') in einem in die Aufnahmeöffnung (15; 15';15"; 15"') eingesteckten Zustand mit der Zuführungs- und Abführungsleitung (11, 13; 11"', 13"') in Fluidverbindung steht.

3. Turbine (1; 1') nach Anspruch 1 oder 2,
**dadurch gekennzeichnet, dass**
- die Zuführungsöffnung (12') in einem Querschnittsprofil in einem ersten radialen Abstand (R₁) von einem durch die Drehachse (D') des Turbinenrotors definierten Mittelpunkt (M') angeordnet ist und die Abführungsöffnung (14') in einem zweiten radialen Abstand (R₂) von dem Mittelpunkt (M') angeordnet ist,
- der erste radiale Abstand (R₁) größer als der zweite radiale Abstand (R₂) ist.

4. Turbine (1 ") nach einem der Ansprüche 1 bis 3,
**dadurch gekennzeichnet, dass**
- ein den Hochdruckbereich (7") umschließender Bereich des Turbinengehäuses (2") teilweise als Volute (16") ausgebildet ist, welche stromauf in einen sich entlang einer Zuführungskanal-Längsrichtung (ZL) erstreckenden Zuführungskanal (17") übergeht, welcher an einem der Volute (16") abgewandten Ende die Einlassöffnung (3") des Turbinengehäuses (2") aufweist,
- ein Strömungsquerschnitt des Zuführungskanal (17") sich entlang der Zuführungskanal-Längsrichtung (ZL) zu der Einlassöffnung (3") hin wenigstens abschnittsweise vergrößert,
- die Zuführungs- und Abführungsöffnung (12", 14") entlang der Zuführungskanal-Längsrichtung (ZL) versetzt zueinander in dem Zuführungskanal (17") angeordnet sind, wobei die Zuführungsöffnung (12") in einem ersten Abschnitt des Zuführungskanals angeordnet ist, der einen größeren Strömungsquerschnitt aufweist als ein zweiter Abschnitt des Zuführungskanals (17"), in welchem die Abführungsöffnung (14") angeordnet ist.

5. Turbine (1"') nach einem der vorhergehenden Ansprüche,
**dadurch gekennzeichnet, dass**
die Zuführungsöffnung (12"') in dem Hochdruckbereich (7"') und die Niederdrucköffnung (14"') in dem Niederdruckbereich (8"') angeordnet ist, so dass die Zuführungsleitung (11"') den Messraum (9"') fluidisch mit dem Hochdruckbereich (7"') verbindet und die Abführungsleitung (13"') den Messraum (9"') fluidisch mit dem Niederdruckbereich (8"') verbindet.

6. Turbine (1; 1'; 1"; 1'") nach einem der vorhergehenden Ansprüche,
**dadurch gekennzeichnet, dass**
die Zuführungs- und die Abführungsleitung (11, 13; 11', 13') in dem Turbinengehäuse (2; 2'; 2"; 2"') jeweils als Durchgangsbohrung ausgebildet ist.

7. Turbine (1, 1', 1 ", 1'") nach einem der vorhergehenden Ansprüche,
**dadurch gekennzeichnet, dass**
das Turbinengehäuse (2; 2'; 2"; 2"') ein einstückig hergestelltes Gussteil ist.

8. Turbine (1; 1'; 1"; 1"') nach einem der vorhergehenden Ansprüche,
**dadurch gekennzeichnet, dass**
in der Zuführungs- oder Abführungsleitung (11, 13; 11', 13') ein Stellglied zum Einstellen eines Öffnungsquerschnitts der Zuführungs- oder Abführungsleitung (11 13; 11', 13') angeordnet ist.

9. Turbine (1; 1'; 1"; 1") nach einem der vorhergehenden Ansprüche,
**dadurch gekennzeichnet, dass**
der Abgassensor (10; 10'; 10"; 10"') eine Lambdasonde ist.

10. Abgasturbolader, insbesondere für ein Kraftfahrzeug,
- mit einem Verdichter und einer Turbine (1; 1'; 1"; 1"'), die mechanisch miteinander wirkverbunden sind,
- **gekennzeichnet durch** die Ausbildung der Turbine (1; 1'; 1"; 1'") nach einem oder mehreren der vorhergehenden Ansprüche.

11. Abgasturbolader nach Anspruch 10,
**dadurch gekennzeichnet, dass**
der Verdichter einen Verdichterrotor aufweist, der mechanisch mit dem Turbinenrotor (6) der Turbine (1; 1'; 1"; 1'") wirkverbunden ist.

## Claims

1. Turbine (1;1';1";1"') for an internal combustion engine,
- having a turbine housing (2;2';2";2"') comprising an inlet opening and an outlet opening (3, 4; 3'),
- having a housing interior space (5) surrounded by the turbine housing (2;2';2";2"') and adapted to be subjected to a through-flow of exhaust gas from the internal combustion engine,
- having a turbine rotor (6) rotatably mounted in the turbine housing (2;2';2";2"') about an axis of rotation (D) defining an axial direction (A), the turbine rotor (6) separating the housing interior space (5) into a high-pressure region (7, 7") fluidically connected to the inlet opening (3; 3') and a low-pressure region (8, 8"') fluidically connected to the outlet opening (4),
- having a measuring chamber (9; 9' ;9"; 9"') provided in the turbine housing (2;2';2";2"'), in which an exhaust gas sensor (10; 10'; 10"; 10"') for determining at least part of a gas component of the exhaust gas carried in the turbine housing (2;2';2";2"') is at least partially arranged,
- wherein feed lines (11; 11"), each having a feed opening (12;12';12";12"'), and discharge lines (13; 13"), each having a discharge opening (14; 14'; 14"; 14"'), for respectively feeding or discharging exhaust gas into or out of the measuring chamber (9; 9' ;9"; 9"') are formed in the turbine housing (2;2';2";2"') integrally with said turbine housing (2;2';2";2"'),
**characterised in that**
a region of the turbine housing (2) surrounding the high-pressure region (7) is partially formed as a volute (16; 16") in which the feed opening (12; 12') of the feed line (11) and the discharge opening (14; 14') of the discharge line (13; 13') are arranged.

2. Turbine (1;1';1";1"') according to claim 1,
**characterised in that**
the measuring chamber (9; 9' ;9"; 9"') is configured as a receiving opening (15; 15'; 15"; 15"') provided on an outer surface of the turbine housing (2;2';2";2"'), into which the exhaust gas sensor (10; 10'; 10"; 10"') can be inserted, so that when inserted in the receiving opening (15; 15'; 15"; 15"') the exhaust gas sensor (9; 9' ;9"; 9"') is fluidically connected to the feed and discharge line (11, 13; 11"', 13"').

3. Turbine (1;1') according to claim 1 or 2,
**characterised in that**
- the feed opening (12') is arranged in a cross-sectional profile at a first radial distance (R₁) from a centre point (M') defined by the axis of rotation (D') of the turbine rotor and the discharge opening (14') is arranged at a second radial distance (R₂) from the centre point (M'),
- the first radial distance (R₁) being greater than the second radial distance (R₂).

4. Turbine (1"') according to one of claims 1 to 3,
**characterised in that**
- a region of the turbine housing (2") enclosing the high-pressure region (7") is partially formed as a volute (16") which merges upstream into a feed channel (17") extending in a longitudinal direction (ZL) of the feed channel, the feed channel (17") comprising, at its end remote from the volute (16"), the inlet opening (3") of the turbine housing (2"),
- a flow cross section of the feed channel (17") increases in size at least in sections toward the inlet opening (3") in the longitudinal direction (ZL) of the feed channel,
- the feed and discharge openings (12", 14") are arranged in the feed channel (17") offset with respect to one another in the longitudinal direction (ZL) of the feed channel, the feed opening (12") being arranged in a first section of the feed channel which has a larger cross section of flow than a second section of the feed channel (17") in which the discharge opening (14") is arranged.

5. Turbine (1"') according to one of the preceding claims,
**characterised in that**
the feed opening (12"') is arranged in the high-pressure region (7"') and the low-pressure opening (14"') is arranged in the low-pressure region (8"') so that the feed line (11'") fluidically connects the measuring chamber (9"') to the high-pressure region (7"') and the discharge line (13"') fluidically connects the measuring chamber (9"') to the low-pressure region (8"').

6. Turbine (1;1';1";1"') according to one of the preceding claims,
**characterised in that**
the feed and discharge lines (11, 13; 11', 13') are each formed as a through-bore in the turbine housing (2;2';2";2"').

7. Turbine (1;1';1";1"') according to one of the preceding claims,
**characterised in that**
the turbine housing (2;2';2";2"') is a casting manufactured in one piece.

8. Turbine (1;1';1";1"') according to one of the preceding claims,
**characterised in that**
an actuator for adjusting a cross section of opening of the feed or discharge line (11, 13; 11', 13') is provided in the feed or discharge line (11, 13; 11', 13').

9. Turbine (1;1';1";1'") according to one of the preceding claims,
**characterised in that**
the exhaust gas sensor (10; 10'; 10"; 10"') is a lambda probe.

10. Exhaust gas turbocharger, particularly for a motor vehicle,
- having a compressor and a turbine (1;1';1";1"') which are mechanically operationally connected to one another,
- **characterised in that** the turbine (1;1';1";1"') is configured according to one or more of the preceding claims.

11. Exhaust gas turbocharger according to claim 10,
- **characterised in that** the compressor comprises a compressor rotor which is mechanically operationally connected to the turbine rotor (6) of the turbine (1;1';1";1"').

## Revendications

1. Turbine (1 ; 1' ; 1" ; 1"') pour un moteur à combustion interne,
- avec un carter de turbine (2 ; 2' ; 2" ; 2"') comportant un orifice d'admission et un orifice d'échappement (3, 4 ; 3'),
- avec un espace intérieur de carter (5) qui est entouré par le carter de turbine (2 ; 2' ; 2" ; 2"') et qui peut être traversé par un gaz d'échappement provenant du moteur à combustion interne,
- avec un rotor de turbine (6) qui est logé dans le carter de turbine (2 ; 2' ; 2" ; 2"') de manière à tourner autour d'un axe de rotation (D) définissant une direction axiale (A) et qui sépare l'espace intérieur de carter (5) en une zone à haute pression (7, 7") en liaison, pour les fluides, avec l'orifice d'admission (3 ; 3') et une zone à basse pression (8, 8"') en liaison, pour les fluides, avec l'orifice de d'échappement (4),
- avec un espace de mesure (9 ; 9' ; 9" ; 9"') qui est installé dans le carter de turbine (2 ; 2' ; 2" ; 2"') et dans lequel un capteur de gaz d'échappement (10 ; 10' ; 10" ; 10"') est agencé au moins en partie pour déterminer au moins une part d'une composante gazeuse du gaz d'échappement conduit dans le carter de turbine (2 ; 2' ; 2" ; 2'"),
- dans le carter de turbine (2 ; 2' ; 2" ; 2"'), une conduite d'alimentation (11 ; 11") avec un orifice d'alimentation (12 ; 12' ; 12" ; 12"') et une conduite d'évacuation (13 ; 13") avec un orifice d'évacuation (14; 14' ; 14" ; 14"') étant conçus de manière intégrée au carter de turbine (2 ; 2' ; 2" ; 2"') respectivement pour l'alimentation et l'évacuation de gaz d'échappement respectivement dans et hors de l'espace de mesure (9 ; 9' ; 9" ; 9'"),
**caractérisée en ce qu'**une zone, entourant la zone à haute pression (7), du carter de turbine (2) est conçue partiellement comme une volute (16; 16') dans laquelle sont agencés l'orifice d'alimentation (12 ; 12') de la conduite d'alimentation (11) et l'orifice d'évacuation (14 ; 14') de la conduite d'évacuation (13 ; 13').

2. Turbine (1 ; 1' ; 1" ; 1"') selon la revendication 1, **caractérisée en ce que** l'espace de mesure (9 ; 9' ; 9" ; 9"') est conçu comme un orifice de logement (15 ; 15' ; 15" ; 15"') qui est prévu sur une surface extérieure du carter de turbine (2 ; 2' ; 2" ; 2"') et dans lequel le capteur de gaz d'échappement (10 ; 10' ; 10" ; 10"') peut être inséré de telle sorte que, lorsqu'il est inséré dans l'orifice de logement (15 ; 15' ; 15" ; 15"'), le capteur de gaz d'échappement (9 ; 9' ; 9" ; 9"') est en liaison, pour les fluides, avec la conduite d'alimentation et la conduite d'évacuation (11, 13 ; 11"', 13"').

3. Turbine (1 ; 1') selon la revendication 1 ou 2, **caractérisée en ce que**
- l'orifice d'alimentation (12') est agencé, dans un profil en section transversale, à une première distance radiale (R₁) d'un centre (M') défini par l'axe de rotation (D') du rotor de turbine et l'orifice d'évacuation (14') est agencé à une deuxième distance radiale (R₂) du centre (M'),
- la première distance radiale (R₁) est plus grande que la deuxième distance radiale (R₂).

4. Turbine (1") selon l'une des revendications 1 à 3, **caractérisée en ce que**
- une zone, entourant la zone à haute pression (7"), du carter de turbine (2") est conçue partiellement comme une volute (16") se transformant en amont en un canal d'alimentation (17") qui s'étend le long d'une direction longitudinale de canal d'alimentation (ZL) et qui comporte, à une extrémité éloignée de la volute (16"), l'orifice d'admission (3") du carter de turbine (2"),
- une section transversale d'écoulement du canal d'alimentation (17"') s'agrandit au moins par tronçons le long de la direction longitudinale de canal d'alimentation (ZL) vers l'orifice d'admission (3"),
- l'orifice d'alimentation et l'orifice d'évacuation (12", 14") sont agencés décalés l'un par rapport à l'autre le long de la direction longitudinale de canal d'alimentation (ZL) dans le canal d'alimentation (17"), l'orifice d'alimentation (12") étant agencé dans un premier tronçon du canal d'alimentation, lequel premier tronçon a une plus grande section transversale d'écoulement qu'un deuxième tronçon du canal d'alimentation (17"), deuxième tronçon dans lequel est agencé l'orifice d'évacuation (14").

5. Turbine (1"') selon l'une des revendications précédentes, **caractérisée en ce que** l'orifice d'alimentation (12"') est agencé dans la zone à haute pression (7"') et l'orifice d'évacuation (14"') est agencé dans la zone à basse pression (8"') de telle sorte que la conduite d'alimentation (11"') relie pour les fluides l'espace de mesure (9"') à la zone à haute pression (7"') et la conduite d'évacuation (13"') relie pour les fluides l'espace de mesure (9"') à la zone à basse pression (8"').

6. Turbine (1; 1' ; 1" ; 1"') selon l'une des revendications précédentes, **caractérisée en ce que** la conduite d'alimentation et la conduite d'évacuation (11, 13 ; 11', 13') sont agencées dans le carter de turbine (2 ; 2'; 2" ; 2"'), à chaque fois sous forme de trou débouchant.

7. Turbine (1; 1' ; 1" ; 1"') selon l'une des revendications précédentes, **caractérisée en ce que** le carter de turbine (2 ; 2' ; 2" ; 2"') est une pièce moulée fabriquée d'un seul tenant.

8. Turbine (1 ; 1' ; 1" ; 1"') selon l'une des revendications précédentes, **caractérisée en ce que** dans la conduite d'alimentation ou la conduite d'évacuation (11, 13 ; 11', 13') est agencé un élément de réglage pour le réglage d'une section transversale d'ouverture de la conduite d'alimentation ou la conduite d'évacuation (11, 13 ; 11', 13').

9. Turbine (1; 1'; 1" ; 1"') selon l'une des revendications précédentes, **caractérisée en ce que** le capteur de gaz d'échappement (10 ; 10' ; 10" ; 10"') est une sonde lamba.

10. Turbocompresseur, notamment pour un véhicule automobile,
- avec un compresseur et une turbine (1; 1' ; 1" ; 1"'), qui sont en liaison mécanique active l'un avec l'autre,
**caractérisé par** la conception de la turbine (1; 1' ; 1" ; 1"') selon une ou plusieurs des revendications précédentes.

11. Turbocompresseur selon la revendication 10, **caractérisé en ce que** le compresseur comporte un rotor de compresseur qui est en liaison mécanique active avec le rotor de turbine (6) de la turbine (1 ; 1' ; 1" ; 1"').
